Europäisches Patentamt

European Patent Office

Office européen des brevets

(11) Publication number: **0 422 398 A2**

## EUROPEAN PATENT APPLICATION

(21) Application number: 90117528.1

(22) Date of filing: 12.09.90

(51) Int. Cl.5: G06F 9/45

(30) Priority: 12.10.89 US 420789

(43) Date of publication of application:
17.04.91 Bulletin 91/16

(84) Designated Contracting States:
DE FR GB

(71) Applicant: INTERNATIONAL BUSINESS
MACHINES CORPORATION

Armonk, NY 10504(US)

(72) Inventor: O'Brien, John Kevin
Box 325, RR 3 Hoyt Street
South Salem, New York 10590(US)

(74) Representative: Blutke, Klaus, Dipl.-Ing.
IBM Deutschland GmbH Intellectual Property
Dept. Schönaicher Strasse 220
W-7030 Böblingen(DE)

(54) A method of optimizing a computer program by removing invariant branches from loops.

(57) Removal of invariant branches from nests of loops results in an optimized computer program with increased speed of execution. To accomplish this objective, each loop of a program is then examined, looking at inner loops before their containing outer loops, to locate conditional branch instructions which are loop invariant. Each conditional branch which is evaluated based upon loop invariant calculations is rewritten, outside the outermost loop for which this branch is invariant. The moved branch is modified to branch around the loop in which it was originally contained if its condition is evaluated false. A new copy of the loop is made in which the invariant branch is rewritten as an unconditional branch. In the original copy of the loop, the invariant branch is deleted, and a branch is inserted after the modified original loop to skip around the new copy when the original copy is executed. Finally, any sections of the program which will never be executed as a result of the above described transformation are deleted.

# A METHOD OF OPTIMIZING A COMPUTER PROGRAM BY REMOVING INVARIANT BRANCHES FROM LOOPS

This invention relates to optimizing computer programs. In particular, a method is set forth for the removal of invariant branches from instruction loops of a computer program.

After a computer program has been written in a high level language (i.e. Fortran, Pascal, C), a compiler program is typically used to convert this program into a sequence of machine language instructions to be executed by a computer. These machine language instructions are also called object code. There are many ways to express a program written in a high level language in object code. In particular, some object code interpretations of the high level language program will run faster than others. For this reason, compiler systems are often equipped to perform a procedure called code optimization. Code optimization is a technique whereby object code is improved so that a program will execute in less time.

Code optimization can be achieved through numerous methods. Repetitious computations may be deleted. Variables that never change may be replaced with constants. An expression within a loop which is always evaluated identically regardless of loop iteration can be moved to a location outside of the loop.

A particular area of interest in the field of code optimization relates to decreasing the running time of program loops, i.e., sections of programs that repeat. Because computer programs spend a relatively large amount of time executing instructions in loops, a code optimization technique which decreases loop execution time can be extremely useful for improving the execution time of the entire computer program.

A common method of improving loop performance is to relocate a computation that produces the same result each time around the loop to a point in the computer program just before the loop begins execution. In this way the computation need only be done once, when the loop is entered, rather than each time the loop is repeated. Such a computation is called a loop invariant.

U.S. Patent No. 4,567,574 to Saade et al. relates to a method for optimizing COBOL source programs which include PERFORM statements. Where appropriate, the code for the procedure or simplified linkage code is substituted for the PERFORM statement.

U.S. Patent No. 4,656,582 to Chaitin et al. relates to an optimization method which uses "code motion" and "common subexpression elimination." For instructions which may use values in memory or values in temporary registers, the optimization method selects the best form of instruction for the context in which it lies.

U.S. Patent No. 4,773,007 to Kasada et al. relates to a method of data flow analysis for determining array element interdependence as a precursor to program code optimization.

It is the object of the invention to optimize a computer program that contains loop invariant conditional branch instructions. This object of the invention is accomplished by the features of the main claims.

Further advantages of the invention are characterized in the subclaims.

Once optimized, the computer program can be executed in a shorter amount of time than before it was optimized.

In the present invention, a method is set forth for the removal of loop invariant conditional branch instructions from the computer program in which these instructions reside.

Operation of the present invention occurs in a series of steps as follows: First, each loop of the program is examined, inner loops are inspected before their containing outer loops, to locate conditional branch instructions which are loop invariant. Each conditional branch in which the condition includes only loop invariant calculations is rewritten, outside the outermost loop for which this branch is invariant. The moved branch is modified to branch around the loop in which it was originally contained if its condition evaluates to a first predetermined logical value. A new copy of the loop is made in which the invariant branch is rewritten as an unconditional branch. This branch and all other branches in the copied loop are modified relative to the beginning of the copied loop. In the original copy of the loop, the invariant branch is deleted, and a branch is inserted after the modified original loop to skip around the new copy when the original copy is executed. Finally, as an optional step, any sections of the program which will never be executed as a result of the above described transformation are deleted.

For a better understanding of the present invention, reference is made to the following description taken in connection with the accompanying drawings.

Figs. 1-4 are graph diagrams which are useful for explaining the operation of the present invention.

Figs. 5A and 5B are a flow chart diagrams which illustrate the operation of the present invention.

Figs. 6, 7A and 7B, and 8 are exemplary computer programs which are useful for describing the present invention.

Fig. 9A is a graphical representation of the computer program shown in Fig. 6.

Fig. 9B is a graphical representation of the computer program shown in Figs. 7A and 7B.

Detailed Description

The following are definitions of terms that are used in the description of the invention that follows.

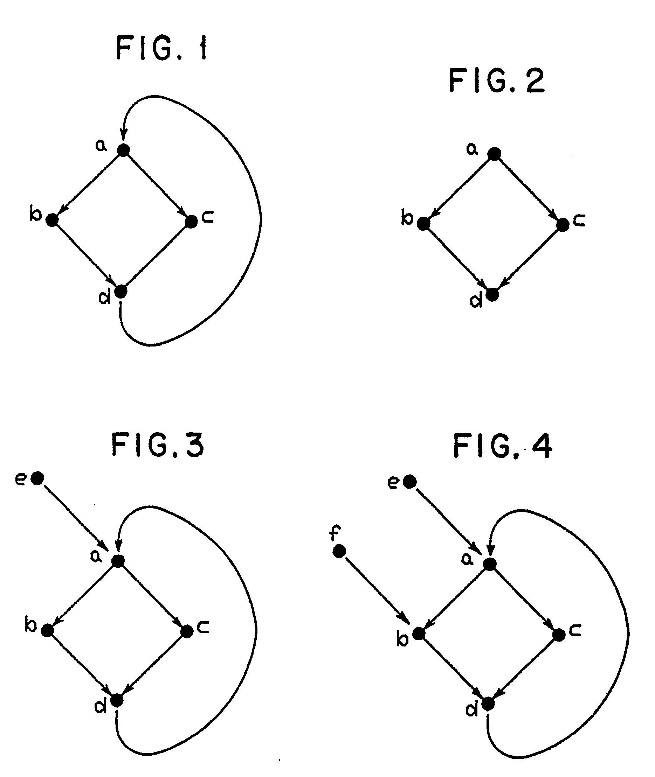

STRONGLY CONNECTED REGION (SCR) - A directed graph in which for every two vertices (A) and (B) in the graph there is a path from (A) to (B) as well as a path from (B) to (A). Fig. 1 illustrates a strongly connected graph. This graph is strongly connected because there is a path from any node in the graph to any other node in the graph. Fig. 2 is an example of a graph which is not strongly connected. This graph is not strongly connected because, for example, there is no path from node d to node a.

SINGLE ENTRY STRONGLY CONNECTED REGION (SESCR) - A strongly connected region in which there is only one node which has predecessors outside the strongly connected region. A single entry strongly connected region corresponds to the common programming notion of a loop. Fig. 3 is an example of a graph which contains a single entry strongly connected region. This graph illustrates a SESCR because the only path from node e to strongly connected subgraph a,b,c,d is through node a. In Fig. 4, an example of a graph is shown that is not single entry strongly connected. This graph is not a depiction of a SESCR because there are two nodes which have predecessors outside the strongly connected region (i.e. node f is a predecessor of node b and node e is a predecessor of node a).

REGION CONSTANT (RC) - With respect to a SESCR, a value that is not computed in the SESCR. In Fig. 3, node e illustrates a region constant.

ARTICULATION NODE (AN) - A node of a subgraph which must be visited on every traversal of the sub-graph. In Fig. 1, nodes a & d are articulation nodes.

PREDICATE - A mathematical relationship which determines the behavior of a conditional instruction.

CONDITION CODE - An indication of whether a value is negative, zero, or positive.

In the process of optimizing a computer program, it may be desirable to relocate a conditional branch instruction to a point outside of its originally containing loop. This may occur, for example, when a conditional branch instruction demonstrates the property of loop invariance, which is to say, it is evaluated identically regardless of the iteration of the loop. The relocation of such a statement to a point just prior to loop execution alleviates repetitious, unnecessary evaluations. For example, in pipelined computer systems without sophisticated branch prediction hardware, conditional branch instructions may significantly reduce processor utilization. Thus, by reducing the number of conditional branch instructions encountered during the executions of a program a major, positive impact on program running time may be achieved.

In the exemplary embodiment of the invention described below, a loop that has an invariant conditional branch instruction is transformed into two loops. The first loop is the original loop. The second loop is an exact copy of the original loop. However, the destination of branches in the second loop are modified relative to the beginning of the second loop. In the first loop the conditional branch instruction is deleted and nothing is put in its place. In the second loop the conditional branch instruction is replaced with an unconditional branch instruction. The condition of the original conditional branch instruction may be evaluated before either loop is entered. If this condition evaluates false, then the first newly created loop is executed. Otherwise, the second newly created loop is executed. In this way, the condition is evaluated only once, as opposed to an evaluation for every iteration of the loop. This technique is called unswitching.

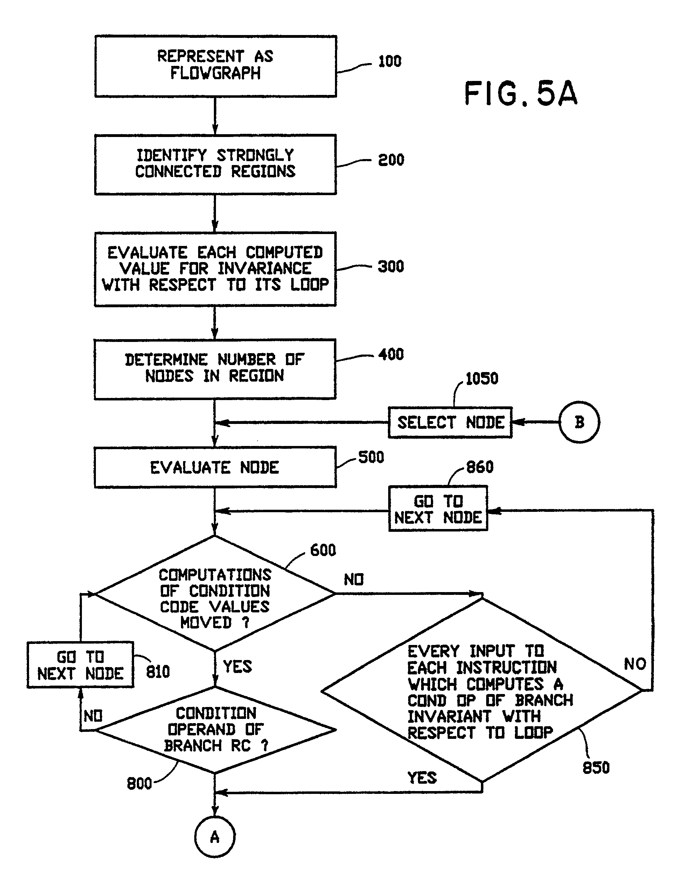

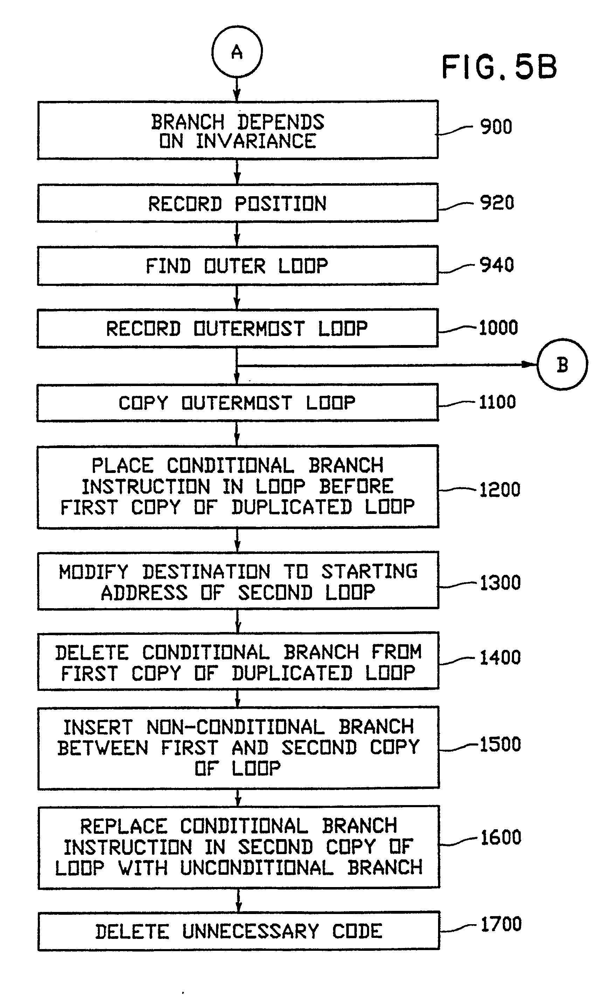

Operation of the present invention is shown in Fig. 5. Before analyzing a computer program for optimization, it is desirable to represent the program as a flow graph (step 100). In the present embodiment of the invention, the Tarjan algorithm is used to accomplish this task. However, any method of constructing a flow graph may be used. The Tarjan algorithm is described in an article by Tarjan, R. E., "Depth first search and linear graph algorithms," SIAM J. Computing 1 : 2 at pages 146 - 160 which is hereby incorporated by reference.

Once the flow graph has been generated, it is possible to identify loops which may be targets for optimization within the program. This is accomplished by locating SESCR's of the flow graph (step 200). In this embodiment of the invention, SESCR's are identified by using an algorithm set forth in the referenced Tarjan article. However, any algorithm for identifying SESCR's can be used.

In step 300, each computed value in a SESCR is evaluated to determine whether or not that computation is invariant with respect to the loop in which it resides. Computations that possess this property are so marked. A computation is invariant if it is characterized as a region constant in a directed graph representation of the program.

Methods of identifying region constants are well known in the art. In this embodiment of the invention, the following algorithm is used. The first step is to perform invariant code motion as set forth in Chapter 13 of Principles of Compiler Design by A. Aho et al. Addison Wesley, 1979 pages 454-471, which is hereby incorporated by reference. Next, for each SESCR in the flow graph, all results computed by the program are placed into a working set for the region under consideration. Each basic block (flow graph node) in the region is then examined and each computation performed in the block is removed from the working set. When all of the blocks in the region have been examined, the computations remaining in the working set are the region constants.

After identifying the region constants, the next step in this optimization process is to determine those branches which depend on invariant predicates. The number of nodes in each region is determined (step 400). The flow chart of Figs. 5A and 5B has been simplified to show operations performed on one SESCR. However, in the exemplary embodiment of the invention, each SESCR is considered, starting with innermost SESCR's of a directed graph and working outward. In considering each node in the SESCR (step 500), single node regions may be ignored, since they have no interior branches. Also latch nodes (i.e. a node in the loop which is at the predecessor of the loop header) may be ignored.

There are at least two methods to determine which branches depend on invariants. The method used depends on whether condition code values have previously been moved in the computer program by other code optimization processes (step 600).

Where the optimization process has moved the condition code computations outside of the loop, the condition part of the branch is examined to determine if it is a region constant (step 800). If the condition part of the branch is a region constant, then the conditional branch instruction is invariant with respect to the loop in which it resides (step 900 via off page connector A). Otherwise, the node is ignored and the next node is evaluated (step 810).

Where condition code computations have not been moved, every input value to each instruction which computes a condition operand of a branch is examined (step 850). If every input value is invariant with respect to the loop under analysis, then the condition part is invariant with respect to this loop (step 900 via off page connector A).

Otherwise the next node in the loop is evaluated (step 860). If a branch instruction is invariant with respect to the loop in which it resides, its position is recorded (step 920) and a search is conducted to determine the outermost loop for which the invariance holds (step 940). This is done by applying the region constant algorithm (previously referenced) to nodes adjacent to that recorded in step 920 (step 1050 via off page connector B). In this way, the branch can be moved to a point outside of the loops for which it is invariant, thereby decreasing the program execution time as set forth above. The position of this outermost loop is then recorded (step 1000).

In the present embodiment of the invention, nodes are only evaluated if they are articulation nodes of an instruction loop of the computer program. However, it is contemplated that this restriction may be removed. Algorithms for finding articulation nodes are well known in the field of graph theory.

After loops have been identified for optimization, the computer program may be rewritten in order to achieve optimization. Loops are processed in the inverse order of their identification.

In step 1100, a loop which has been identified for optimization is copied. This results in two copies of the loop. A first copy of the loop will be executed if the invariant conditional branch evaluates to false. The second copy of the loop will be executed if the invariant conditional branch evaluates to true. In creating the second copy, the destination of branches in the copy are modified relative to the beginning of this loop.

At step 1200, the conditional branch instruction is placed in the program before the original copy of the loop. The destination of this conditional branch instruction is modified to be the starting address of the second copy of the loop (step 1300).

At step 1400, the conditional branch instruction, which is located in the first copy of the duplicated loop is deleted. Nothing is put in its place.

At step 1500, a non-conditional branch instruction is inserted between the first and the second copies of the duplicated loop. The destination of this branch is the instruction immediately following the second copy of the duplicated loop. In this way, when execution of the first loop is complete, program execution will jump over the second loop, to the instruction that followed the original loop in the unmodified program.

At step 1600, the conditional branch instruction which is located in the second copy of the loop is replaced with an unconditional branch. The destination of this branch is the target of the original conditional branch instruction.

Finally, at step 1700, code, which has become unnecessary for proper program operation (i.e. unreachable code) as a result of optimization, is deleted. While any applicable algorithm may be used to accomplish this objective, an exemplary algorithm is described in chapter 15 of Principles of Compiler Design , by A. Aho et al., Addison Wesley, 1979, pages 549-550, which is hereby incorporated by reference.

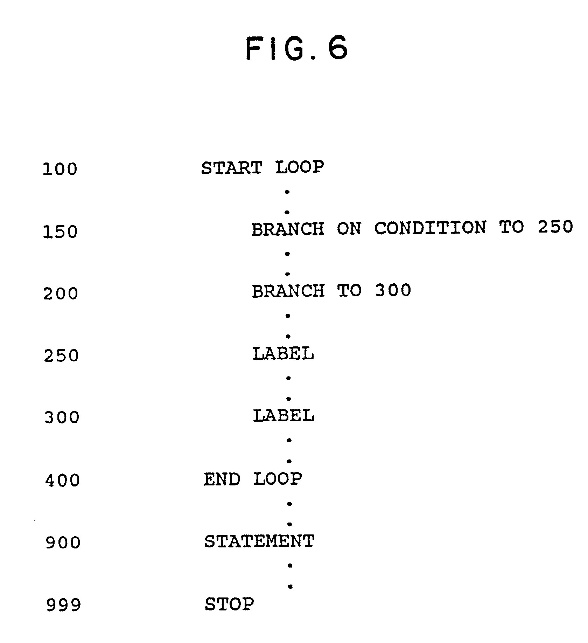

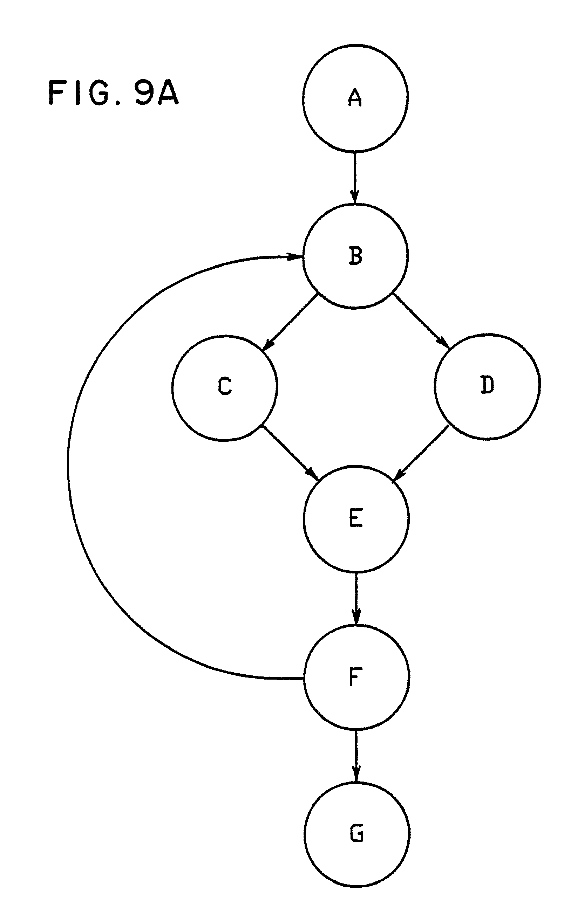

Figs. 6, 7A, 7B and 8 an illustrate the operation of the algorithm discussed in reference to Figs 5A and 5B above. The exemplary program of Fig. 6 is depicted graphically in Fig. 9A. This program contains a branch instruction which is invariant with respect to the loop in which it is contained.

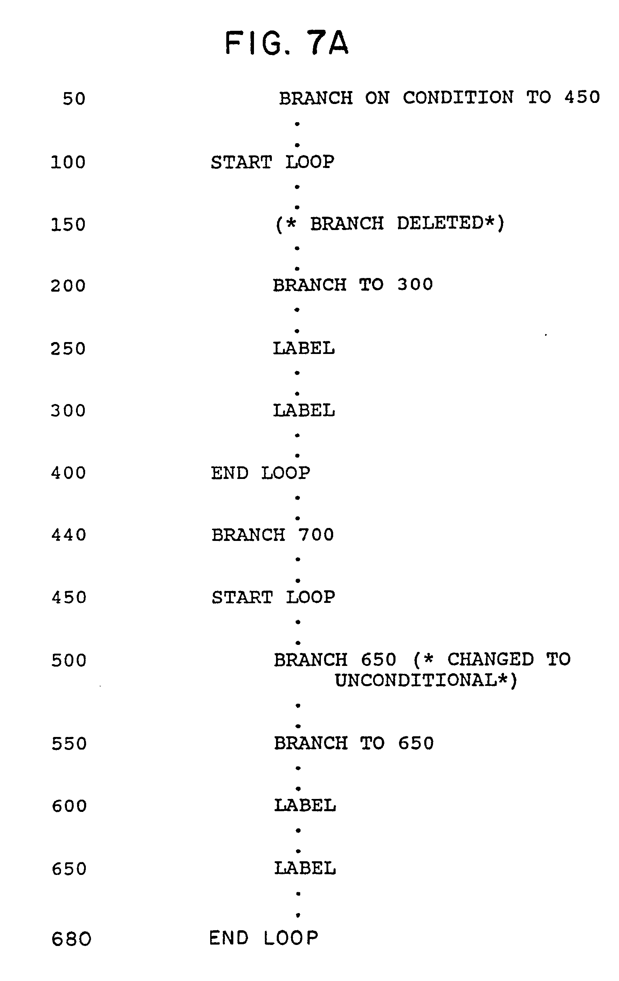

As can be seen, the loop which is shown in lines 100-400 of Fig. 6 is duplicated and appears in Fig. 7A at lines 100-400 and 450-680. In duplicating the loop, the destination of branches in the duplicate loop are modified relative to the beginning of this loop. In line 50 of Fig. 7A, a conditional branch instruction is placed in the computer program before the code for either loop. In Fig. 7A, line 150, the conditional branch instruction is deleted and at line 500, the conditional branch instruction of the prior figure is replaced with an unconditional branch in the second copy of the loop. The destination of this branch remains the same, relative to the beginning of the loop in which it resides.

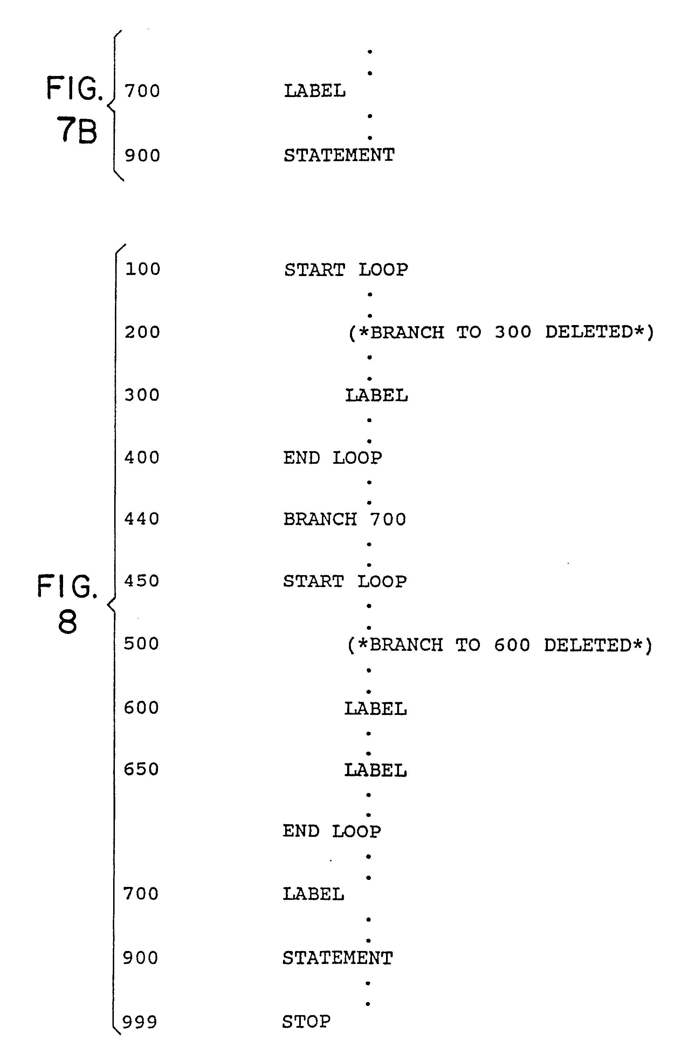

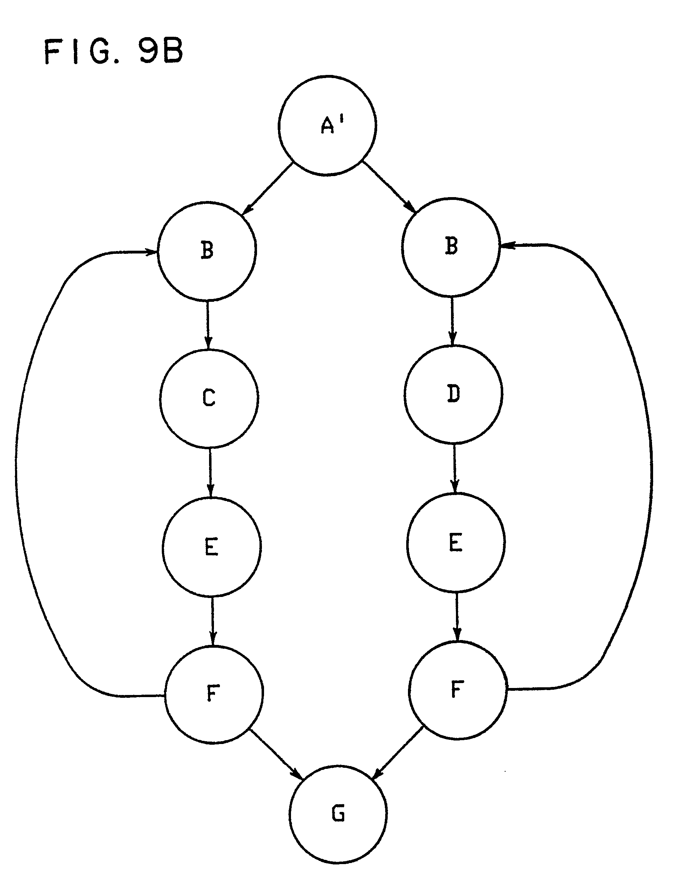

Fig. 8 illustrates the optimized exemplary program after the unreachable code has been deleted. The program of Fig. 8 is graphically depicted in Fig. 9B. The instruction at line 250 is considered unreachable because the instruction at line 200 jumps right over it. Similarly, the instruction at line 600 is considered unreachable because the instruction at line 550 jumps right over it.

While the invention has been described in terms of an exemplary embodiment, it is contemplated that it may be practiced as outlined above with modifications within the spirit and scope of the appended claims.

**Claims**

1. A method of reducing the execution time of a computer program which includes at least one instruction loop having a first conditional branch instruction which has a condition part and a branch part wherein the condition part is invariant with respect to the instruction loop, said method comprising the steps of:

a) identifying said first conditional branch instruction;

b) copying said first conditional branch instruction to a location in the computer program immediately before the instruction loop to create a second copy of the conditional branch instruction;

c) copying the instruction loop to create a copy of the instruction loop, including a third copy of the conditional branch instruction, and inserting the copy of the instruction loop in a location in the computer program after the instruction loop;

d) modifying the branch part of the second copy of the conditional branch instruction to branch to the copy of the instruction loop;

e) inserting an unconditional branch instruction, to branch around the copy of the instruction loop, at a location in the computer program before the copy of the instruction loop; and

f) deleting the first conditional branch instruction.

2. The method of claim 1, further comprising the step of changing the third conditional branch instruction to an unconditional branch instruction.

3. The method of claim 1, wherein the step a) is preceded by the step of removing computations, which are invariant with respect to the instruction loop, from the instruction loop.

4. The method of claim 1, wherein said instruction loop is nested within one or more outer loops and the step b) includes the step of copying the first conditional branch instruction to a location in the computer program immediately preceding an outmost loop for which the condition part of the first conditional branch instruction is invariant.

5. The method of claim 1, wherein steps a) through f) are repeated for each conditional branch in the instruction loop having a condition part which is invariant with respect to the instruction loop.

6. The method of claim 1, wherein a computer program consists of a plurality of instruction loops and step a) includes the steps of:

a1) selecting one of said instruction loops for the identification of said first conditional branch instruction; and

b1) evaluating a further instruction loop if said first conditional branch instruction is not identified in the selected instruction loop.

7. The method of claim 1, further comprising the step of deleting unnecessary sections of the computer program.

8. The method of claim 1, wherein the step a) includes the step of:

a1) representing the computer program as a flowgraph; and

a2) evaluating the flowgraph to indentify said first conditional branch instruction as being invariant with respect to the instruction loop.

9. The method of claim 8, wherein the step a1) further include the steps of:

a3) identifying region constants for the instruction loop; and

a4) identifying said first conditional branch instruction as being controlled by at least one of the identified region constants.

10. The method of claim 8, wherein said first conditional branch instruction is identified only if it is represented by a flow graph as an articulation node of a strongly connected region.

11. A method of reducing the execution time of a computer program, having at least one instruction loop which includes at least one conditional branch instruction having a condition part and a branch part, said instruction loop including a set of computations including input values thereto, in which the set of computations affect the condition part of the conditional branch instruction, said method comprising the steps of:

a) identifying a conditional branch instruction in said instruction loop;

b) examining the input valves to the set of computations to determine whether the condition part of said conditional branch instruction is invariant with respect to the instruction loop;

c) repeating step b) until a conditional branch instruction which is invariant with respect to the instruction loop is found;

d) copying said invariant conditional branch instruction to a location in the computer program immediately before the instruction loop to create a first copy of the invariant conditional branch instruction;

e) copying the instruction loop to create a copy of the loop, including a second copy of the invariant conditional branch instruction, and inserting the copy of the loop in a location in the computer program after the instruction loop;

f) modifying the branch part of the first copy of the conditional branch instruction to branch to the copy of the loop;

g) inserting an unconditional branch instruction, to branch around the copy of the instruction loop, at a location in the computer program before the copy of the instruction loop; and

h) deleting the invariant conditional branch instruction.

12. The method of claim 11, further comprising the step of changing the second copy of the conditional branch instruction to an unconditional branch instruction.

## FIG. 1

## FIG. 2

## FIG. 3

## FIG. 4

## FIG. 5A

REPRESENT AS FLOWGRAPH — 100

IDENTIFY STRONGLY CONNECTED REGIONS — 200

EVALUATE EACH COMPUTED VALUE FOR INVARIANCE WITH RESPECT TO ITS LOOP — 300

DETERMINE NUMBER OF NODES IN REGION — 400

1050

SELECT NODE ← B

EVALUATE NODE — 500

860

GO TO NEXT NODE

600

COMPUTATIONS OF CONDITION CODE VALUES MOVED ? — NO

YES

GO TO NEXT NODE — 810

NO

CONDITION OPERAND OF BRANCH RC ?

800

EVERY INPUT TO EACH INSTRUCTION WHICH COMPUTES A COND OP OF BRANCH INVARIANT WITH RESPECT TO LOOP — 850 — NO

YES

A

FIG.5B

A

BRANCH DEPENDS ON INVARIANCE — 900

RECORD POSITION — 920

FIND OUTER LOOP — 940

RECORD OUTERMOST LOOP — 1000

B

COPY OUTERMOST LOOP — 1100

PLACE CONDITIONAL BRANCH INSTRUCTION IN LOOP BEFORE FIRST COPY OF DUPLICATED LOOP — 1200

MODIFY DESTINATION TO STARTING ADDRESS OF SECOND LOOP — 1300

DELETE CONDITIONAL BRANCH FROM FIRST COPY OF DUPLICATED LOOP — 1400

INSERT NON-CONDITIONAL BRANCH BETWEEN FIRST AND SECOND COPY OF LOOP — 1500

REPLACE CONDITIONAL BRANCH INSTRUCTION IN SECOND COPY OF LOOP WITH UNCONDITIONAL BRANCH — 1600

DELETE UNNECESSARY CODE — 1700

# FIG. 6

```
100          START LOOP
                  •
                  •
150             BRANCH ON CONDITION TO 250
                  •
                  •
200             BRANCH TO 300
                  •
                  •
250             LABEL
                  •
                  •
300             LABEL
                  •
                  •
400          END LOOP
                  •
                  •
900          STATEMENT
                  •
                  •
999          STOP
```

# FIG. 7A

```
50          BRANCH ON CONDITION TO 450
                       .
                       .
100    START LOOP
                       .
                       .
150          (* BRANCH DELETED*)
                       .
                       .
200          BRANCH TO 300
                       .
                       .
250          LABEL
                       .
                       .
300          LABEL
                       .
                       .
400    END LOOP
                       .
                       .
440    BRANCH 700
                       .
                       .
450    START LOOP
                       .
                       .
500          BRANCH 650 (* CHANGED TO
                         UNCONDITIONAL*)
                       .
                       .
550          BRANCH TO 650
                       .
                       .
600          LABEL
                       .
                       .
650          LABEL
                       .
                       .
680    END LOOP
```

FIG.
7B

700      LABEL

900      STATEMENT

FIG.
8

100      START LOOP

200      (*BRANCH TO 300 DELETED*)

300      LABEL

400      END LOOP

440      BRANCH 700

450      START LOOP

500      (*BRANCH TO 600 DELETED*)

600      LABEL

650      LABEL

END LOOP

700      LABEL

900      STATEMENT

999      STOP

# FIG. 9A

FIG. 9B